**Europäisches Patentamt**

**European Patent Office**

**Office européen des brevets**

(19)

(11) Veröffentlichungsnummer: **0 170 040**
**B1**

(12) **EUROPÄISCHE PATENTSCHRIFT**

(45) Veröffentlichungstag der Patentschrift:
**26.10.88**

(51) Int. Cl.⁴: **C 01 B 33/32**, B 01 F 5/02,
B 01 J 8/20

(21) Anmeldenummer: **85107721.4**

(22) Anmeldetag: **21.06.85**

(54) Verfahren und Vorrichtung zur kontinuierlichen hydrothermalen Herstellung von Natriumsilikatlösungen.

(30) Priorität: **29.06.84 DE 3423945**

(43) Veröffentlichungstag der Anmeldung:
**05.02.86 Patentblatt 86/6**

(45) Bekanntmachung des Hinweises auf die Patenterteilung:
**26.10.88 Patentblatt 88/43**

(84) Benannte Vertragsstaaten:
**AT BE CH DE FR GB IT LI NL**

(56) Entgegenhaltungen:
**EP - A - 0 033 109**
**EP - A - 0 066 214**
**FR - A - 2 179 573**
**GB - A - 461 013**
**GB - A - 2 119 779**
**US - A - 1 763 845**

(73) Patentinhaber: **Henkel Kommanditgesellschaft auf Aktien, Postfach 1100 Henkelstrasse 67,
D-4000 Düsseldorf-Holthausen (DE)**

(72) Erfinder: **Jeromin, Lutz, Dr., Am Bandsbusch 88,
D-4010 Hilden (DE)**
Erfinder: **Krings, Heinrich, Zum Stadion 52,
D-4018 Langenfeld (DE)**
Erfinder: **Legel, Dieter, Dr., Ernst-Reuter-Weg 5,
D-5657 Haan (DE)**
Erfinder: **Novotny, Rudolf, Dr., Am Rittersberg 14,
D-4000 Düsseldorf 13 (DE)**
Erfinder: **Skrobek, Harald, Senliserstrasse 38,
D-4018 Langenfeld (DE)**

## Beschreibung

Die Erfindung betrifft eine Vorrichtung zur kontinuierlichen Herstellung von Natriumsilikatlösungen unter erhöhtem Druck und bei erhöhten Temperaturen.

Von den unter dem Namen Wasserglas bekannten Alkalimetallsilikatlösungen finden für technische Zwecke am häufigsten Natriumsilikatlösungen, allgemein als Natronwasserglas bezeichnet, Verwendung. Derartige Natronwassergläser weisen üblicherweise einen Feststoffgehalt von etwa 35 Gew.% sowie ein Gewichtsverhältnis $SiO_2:Na_2O$ von 3,3 bis 3,4:1 auf. Die Herstellung solcher Natronwassergläser im technischen Massstab erfolgt durch Zusammenschmelzen von Quarzsand und Soda in hierfür geeigneten Öfen bei Temperaturen im Bereich von 1400 bis 1500°C, wobei $CO_2$ freigesetzt wird. Die beim Abkühlen erstarrende Schmelze, das sogenannte Stückenglas, wird anschliessend in einem weiteren Verfahrensschritt unter Anwendung von Druck und erhöhten Temperaturen in Wasser gelöst und die erhaltenen Lösung, je nach Qualitätsanforderungen, gegebenenfalls filtriert. Durch Vermischen solcher Lösungen mit Natronlauge lassen sich Natriumsilikatlösungen mit einem geringeren Gewichtsverhältnis $SiO_2:Na_2O$ gewinnen. Dieses Verfahren ist jedoch sowohl apparativ als auch hinsichtlich der erforderlichen Energiemengen sehr aufwendig und bedingt relativ hohe Energie- und Anlagenkosten.

Eine weitere Möglichkeit zur Herstellung von Natronwassergläsern besteht darin, Sand mit Hilfe wässriger Natronlauge hydrothermal aufzuschliessen. Nach diesem Verfahren lassen sich Natriumsilikatlösungen mit einem Gewichtsverhältnis $SiO_2:Na_2O$ von bis zu 2,8:1 gewinnen. Gebräuchliche Reaktionsbehälter für derartige Hydrothermalsynthesen sind zylindrische, mit einer Nickelauskleidung versehene Eisenautoklaven, die im Hinblick auf eine ausreichende Durchmischung der Sand-/Natronlauge-Suspension entweder um ihre horizontale Achse drehbar gelagert oder aber mit entsprechenden Rührwerken versehen sind. Nachteile dieses Verfahrens sind jedoch, dass es bisher nicht möglich war, dieses Verfahren kontinuierlich zu führen und dass bis zu einer vollständigen Umsetzung des eingesetzten Sandes – bei technisch sinnvollen, nicht zu hohen Temperaturen – sehr lange Reaktionszeiten in Kauf genommen werden müssen. Zur Erzielung einer möglichst grossen Reaktions-Grenzfläche Sand/Natronlauge ist ausserdem der Einsatz eines grossen Sandüberschusses wichtig, der bei der Reaktion nur zum Teil in Lösung geht und den Rührwerken einen hohen Widerstand entgegensetzt. Dieser Widerstand, wie auch die Reibung des Sandes an den Flügeln der Rührwerke bedingen einen hohen Materialverschleiss, der nur durch grossen technischen Aufwand reduziert werden kann. Die Abtrennung des Sandüberschusses und die Reinigung der gebildeten Natriumsilikatlösung machen zudem eine nachfolgende Filtration unumgänglich, deren Durchführung mit Hilfe von Anschwemmfiltern unter Verwendung von Filterhilfsmitteln ebenfalls technisch aufwendig ist und nicht ohne Probleme verläuft.

In der DE-A 3 002 834 wird ein Verfahren zur hydrothermalen Herstellung von Natriumsilikatlösungen in einem statischen Reaktionsbehälter beschrieben, in dem man die flüssige Phase des Reaktionsgemisches bei hohen Temperaturen und Drücken so lang im Kreislauf durch ein in einen statischen Reaktionsbehälter eingebrachtes Sandbett sowie durch eine ausserhalb des Behälters angeordnete Umgehungsleitung pumpt, bis die $SiO_2$-Konzentration in der flüssigen Phase den gewünschten Wert erreicht hat. Dieses Verfahren weist den Nachteil auf, dass in dem sich trichterförmig nach unten verengenden statischen Reaktionsbehälter, in den die flüssige Phase des Reaktionsgemisches von unten eingepumpt wird, sich ein Grossteil des Sandes in der Nähe des Flüssigkeitseinlaufs sowie auf den «Trichter»-Flächen ansammelt und nur eine schmale, sich nach oben erweiternde Reaktionszone ausgebildet wird, in der aufgrund guter Durchmischung durch die eingepumpte Lösung ein ausreichender Kontakt zwischen festem Sand und der alkalischen Reaktionslösung gegeben ist. Hohe Temperaturen und Drücke sowie vergleichsweise lange Reaktionszeiten sind daher notwendig, um die gewünschte $SiO_2$-Konzentration in der flüssigen Phase zu erreichen. Bei einer Störung der Anlage, z.B. durch Ausfall der zuführenden Flüssigkeitspumpe, wird auch diese schmale Reaktionszone umgehend durch sich absetzenden Sand zugesetzt, und eine mechanische Entfernung des festgebackenen Sand-Wasserglas-Kuchens wird erforderlich.

In der DE-A 3 121 669 wird ein weiteres kontinuierliches Verfahren zur Durchführung heterogener Reaktionen unter Beteiligung von in körniger Form vorliegenden festen Komponenten in einem vertikalen Reaktionsgefäss offenbart, in dem das Reaktionsgemisch gegen den im Reaktor herrschenden Druck von unten in den Reaktor eingespeist wird. Für eine gleichmässige Verteilung der verschiedenen Reaktionskomponenten, insbesondere der körnigen Reaktionspartner, sollen im Reaktionsgefäss angeordnete mechanische Einbauten sorgen, beispielsweise perforierte Böden, durch die die Reaktionsmischung gedrückt wird. Reaktoren dieser Ausführung lassen sich auch für Hydrothermal-Reaktionen zur Herstellung von Alkalimetallsilikat-Lösungen verwenden, weisen jedoch den Nachteil auf, dass die genannten perforierten Böden sehr schnell durch die Reaktionskomponente Sand verstopft werden und dadurch nicht zu einer ausreichenden Vermischung der Reaktionspartner beitragen.

Ein weiteres Verfahren zur Herstellung von Alkalimetallsilikatlösungen in einem statischen Reaktor wird in der DE-A 3 313 814 beschrieben. Das Verfahren gemäss der genannten DE-A offenbart die Reaktion einer wässrigen Alkalihydroxidlösung, bevorzugt Natriumhydroxidlösung, mit Siliciumdioxid in Form von grobkörnigem Sand ohne mechanische Bewegung in einem senkrechten rohrförmigen Reaktor. Die alkalische Lösung wir von oben in den Reaktor eingespeist, während unten klare Alkalimetallsilikatlösungen abgezogen werden können. Nachteil dieses Verfahrens ist es, dass die alkalische Lösung den Sand nur sukzessive löst und kleiner werdende Sandkörner, auch unter dem Druck der strömenden Lösung, zu einem festen Quarzmehlkuchen mit erhöhtem Strömungswiderstand zusammenbacken, der die Durchströmung der Lösung behindert. Nachteilig ist auch, dass unlösliche Verunreinigungen im Reaktor verbleiben, da das Sandbett als Filter wirkt.

Die vorliegende Erfindung stellte sich die Aufgabe, die Nachteile von Verfahren, die aus dem Stand der Technik bekannt waren, zu überwinden. Dabei wurde die Erfahrung zugrunde gelegt, dass die Herstellung von Natriumsilikatlösungen durch ein Hydrothermalverfahren gute Voraussetzungen für eine kontinuierliche Verfahrensführung hat, da grosse Produktmengen eines Monoproduktes, d.h. eines Produktes mit einheitlicher und gleichbleibender Zusammensetzung, produziert werden müssen. Zwar ist die Geschwindigkeit der Auflösung, d.h. Reaktion des Sandes in Lösungen von NaOH bei Temperaturen oberhalb 200°C, vergleichsweise gross; es kann aber davon ausgegangen werden, dass sich die Lösegeschwindigkeit in einem kontinuierlich betriebenen Löseprozess dadurch noch verbessern lässt, dass man einen Sandüberschuss einsetzt und eine bessere Durchmischung der Suspension gegenüber einem Drehtrommel-Prozess herbeiführt. Dies sollte auch eine ökonomischere Verfahrensführung ermöglichen.

Die Erfindung betrifft eine Vorrichtung zur kontinuierlichen hydrothermalen Herstellung von Natriumsilikat-Lösungen mit einem Gewichtsverhältnis $SiO_2:Na_2O$ von 1 bis 2,8:1 durch Aufschluss von Sand in wässrigen Natriumhydroxid-Lösungen unter Hydrothermalbedingungen bei Temperaturen im Bereich von 150 bis 250°C und Drücken von 5 bis 40 bar, welche dadurch gekennzeichnet ist, dass sie folgende Zusammensetzung von Teilapparaturen enthält:

a) einen Umlauf-Suspensionsreaktor (1), bestehend aus einem Strahlschlaufenmischer (11) mit einem koaxial angeordneten Einsteckrohr (13), der zusätzlich zu einer Treibstrahldüse (16) am Behälterboden mindestens eine Tangentialdüse (17) in Bodennähe aufweist, einen auf den Strahlschlaufenmischer (11) aufgesetzten Schwerkrafteindicker (12),

b) eine am Kopfbereich des Schwerkrafteindickers (12) angebrachte Umlaufleitung (14), die nahezu oder vollständig feststofffreie Reaktionslösung über eine Pumpe (15) den Treibstrahl- bzw. Tangentialdüsen (16 bzw. 17) am Boden des Umlauf-Suspensionsreaktors (1) zuführt,

c) eine Suspendiereinrichtung (2), in der Quarzsand und ein geeignetes Suspensionsmittel mit Hilfe eines Rührers (23) vermischt und mit Hilfe einer Pumpe (24) dem Umlauf-Suspensionsreaktor (1) zugeführt werden,

d) Dosiereinrichtungen mit dazugehörigen Pumpen (31 bzw. 41) für Natronlauge (3) und Wasser (4),

e) eine Dosiereinrichtung für Dampf (5) mit einem durch einen Temperaturregler (53) von einem im Innern des Reaktors (1) angebrachten Temperaturfühler (52) gesteuerten Dampfstellventil (51),

f) Anzeige- bzw. Steuereinheiten für die Höhe des Flüssigkeitsstandes (61) und des Druckes (62),

g) eine am Kopf des Schwerkrafteindickers (12) angebrachte Ablaufleitung (71) für das flüssige Reaktionsprodukt,

h) einen Wärmetauscher (72) mit nachgeschalteter Temperaturkontrolle (73),

i) ein Entspannungsventil (74) und

k) eine zur Filtration der Produkt-Lösung nach an sich bekannten Methoden bestimmte Filteranlage (75).

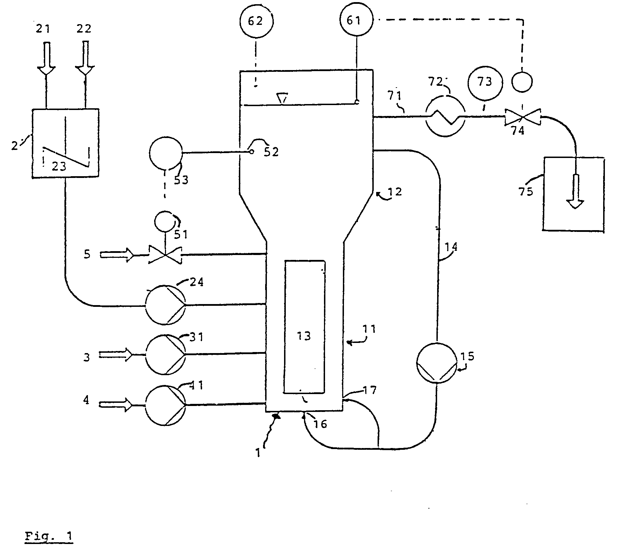

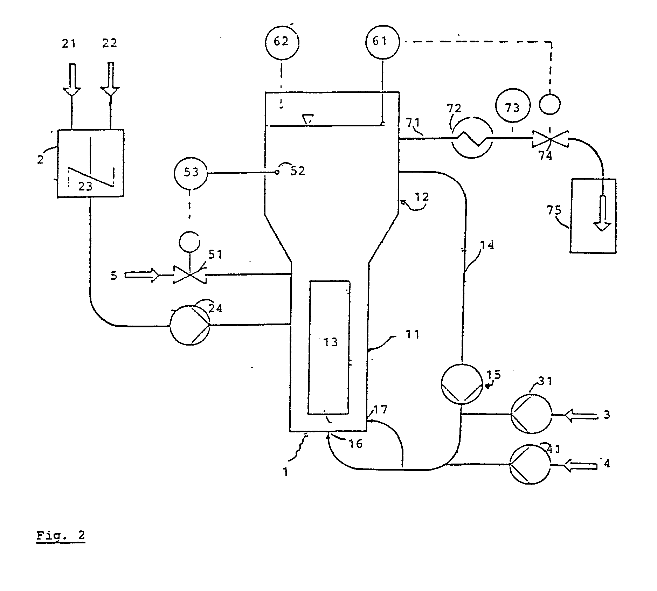

Eine genauere Beschreibung der erfindungsgemässen Vorrichtung erfolgt unter Einbeziehung der in den Figuren 1 und 2 schematisch dargestellten Anlagen. Es zeigen:

Fig. 1 einen Reaktor unter Einbeziehung aller Vorlagen, Dosiereinrichtungen und Messgeräte;

Fig. 2 eine bevorzugte Ausführungsform des Reaktors unter Zufuhr zweier Reaktionskomponenten in den Durchmischungskreislauf.

Wichtigstes Ziel der Erfindung war es, eine möglichst hohe Raum/Zeit-Ausbeute bei der Umsetzung des Quarzsandes mit der Natriumhydroxidlösung zu erzielen. Um dies zu erreichen ist es notwendig, den Feststoffgehalt in der Lösung möglichst hoch zu wählen, dadurch eine – auf das Reaktorvolumen bezogene – möglichst grosse, für die Reaktion geeignete Oberfläche zu schaffen und durch geeignete Vorrichtungen eine gute Durchmischung aller Reaktionskomponenten zu realisieren.

Um dieses Ziel zu erreichen, wird im Sinne der Erfindung ein Umlauf-Suspensionsreaktor 1 eingesetzt, der aus einem Strahlschlaufenmischer 11 als Suspendierapparat und einem darauf aufgesetzten Schwerkrafteindicker 12 mit konisch geformtem Unterteil als Klärapparat besteht. Bestandteile des Strahlschlaufenmischers sind ein zylindrischer druckfester Behälter 11, ein Einsteckrohr 13, das im Strahlschlaufenmischer 11 koaxial angebracht ist, eine im Boden des Reaktors 1 angebrachte, nach oben gerichtete Treibstrahldüse 16 sowie vorzugsweise mehrere in Bodennähe angebrachte, parallel zum Boden und bezogen auf den Mantel tangential gerichtete Tangentialdüsen 17. Eine über eine Pumpe 15 führende Umlaufleitung 14 verbindet den Kopfbereich des Schwerkrafteindickers 12, d.h. einen Bereich, in dem die Lösung ausreichend geklärt ist, mit den genannten Düsen 16 und 17. Der gesamte Reaktor ist als Druckbehälter ausgebildet und besteht aus mit Nickelmetall ausgekleidetem Stahl oder aus hochnickelhaltigem Stahl. Alle Rohrleitungen, die mit den heissen, stark alkalischen Lösungen in Berührung kommen, bestehen gleichfalls aus hochnickelhaltigen Stählen.

Die Treibstrahldüse 16 bewirkt einen intensiven Flüssigkeitsstrom vom Boden des Reaktors durch das Einsteckrohr 13 zum oberen Teil des Reaktors, wobei gleichzeitig zwischen Reaktoraussenwand und Einsteckrohr 13 befindliche Reaktionskomponenten zum Reaktorboden hingezogen und durch das Einsteckrohr in den oberen Teil des Reaktors getrieben werden. Durch diesen Umlauf um das Einsteckrohr 13 wird eine intensive Durchmischung aller Reaktionskomponenten initiiert.

Diese Wirkung wird durch den Suspensionsstrom unterstützt, der durch die ringförmig angeordneten Tangentialdüsen 17 initiiert wird. Eine weitere Aufgabe der Tangentialdüsen 17 ist es, bei eventuellen Störungen des Reaktorbetriebes, die sich im Bodenbereich absetzenden festen Reaktionskomponenten vollständig wieder aufzuwirbeln. Nur so gelingt es, den Reaktor nach einem Stillstand wieder in Betrieb zu nehmen.

Dem Umlauf-Suspensionsreaktor 1 wird der Sand in Form einer Suspension über eine Förderpumpe 24 zugeführt. Es wird dazu beispielsweise feuchter, ungemahlener Quarzsand mit einem $SiO_2$-Gehalt von mindestens 96% und einer mittleren Korngrösse von 0,3 mm verwendet.

In einer geeigneten Suspendiereinrichtung 2, die mit einem Rührer 23 ausgestattet ist, wird der bei 21 zugeführte Sand mit einer bei 22 zugegebenen Suspendierflüssigkeit vermischt und über die Förderpumpe 24 dem Reaktor zugeführt. Als Suspendierflüssigkeit können beispielsweise Wasser, wässrige Natriumhydroxidlösung oder auch Wasserglaslösung verwendet werden; es sind jedoch auch andere Suspendierflüssigkeiten denkbar, deren Gegenwart die Reaktion unter den angegebenen Reaktionsbedingungen nicht behindert. Bevorzugt wird eine Natriumhydroxidlösung eingesetzt.

Über Pumpen 31 bzw. 41 werden dem Reaktor 1 ausserdem Natriumhydroxidlösung 3 und vollentsalztes Wasser 4 zugeleitet. Die Zufuhr dieser beiden Reaktionskomponenten erfolgt entsprechend Fig. 1 im unteren Drittel des Strahlschlaufenmischers 11. Geeignete wässrige Natriumhydroxidlösungen sind z.B. 50%ige Natronlauge, deren $Na_2O$-Gehalt bei 38,7% liegt. Es sind jedoch auch verdünnte Natronlaugen – bis herab zu 10 Gew.% $Na_2O$ – verwendbar, die einen Teil der 50%igen Natronlauge ersetzen.

Die verwendeten Mengen an 50%iger Natronlauge sind auf die zugeführte Sandmenge und die angestrebte Zusammensetzung des fertigen Wasserglases abgestimmt.

Ausserdem wird dem Reaktor 1 über die Pumpe 41 vollentsalztes Wasser zugeführt; die Wassermenge ist ebenfalls auf die zugeführte Sandmenge und die angestrebte Zusammensetzung des Wasserglases abzustimmen.

In einer bevorzugten Ausführungsform der erfindungsgemässen Vorrichtung werden, wie in Fig. 2 dargestellt, insbesondere die Natronlauge und vollentsalztes Wasser dem Flüssigkeitsstrom zugesetzt, der sich ausserhalb des Reaktors im Umlauf befindet. Ein Vorteil dieser Ausführungsform ist es, dass die Lauge sofort gut vermischt und damit verdünnt wird. Dies führt zu einer Minderung der Korrosionsprobleme.

Die Beheizung des Reaktors auf Reaktionstemperaturen im Bereich von 150 bis 250°C erfolgt durch Direkteinblasen von Wasserdampf 5. Die Wasserdampf-Zufuhr erfolgt vorzugsweise im Raum zwischen Reaktorwand und Einsteckrohr 13, da der Dampf sich im abwärts gerichteten Strom vollständig lösen kann, bis das Reaktionsgemisch den durch die Treibstrahldüse 16 initiierten Aufwärtsstrom im Inneren des Einsteckrohres 13 erreicht und Dampfblasen den Impulsaustausch zwischen dem Treibstrahl und dem Umlaufstrom nicht stören können. Die zugeführte Wasserdampfmenge ist abhängig davon, wie gut der Reaktor isoliert ist und mit welchem Ausstoss an Natriumsilikatlösung die Vorrdichtung arbeitet. Eine Steuerung der Menge an Heissdampf lässt sich einfacherweise dadurch bewerkstelligen, dass die Temperatur der Reaktionslösung permanent über einen Temperaturfühler 52 gemessen und über einen Temperaturregler 53 das Dampfstellventil 51 geöffnet bzw. geschlossen wird. Dadurch lässt sich die Temperatur innerhalb enger Grenzen konstant halten.

Ein Manometer 62 zeigt den sich im Reaktor 1 einstellenden Druck an. Statt einer Regelung der Temperatur über den Temperaturfühler 52 und das Dampfstellventil 51 kann auch eine Druckregelung eingesetzt werden.

Das Niveau des Flüssigkeitsspiegels im Reaktor 1 lässt sich mit Hilfe eines Höhenstand-Reglers 61 konstant halten, der damit den Ablauf der Produkt-Lösung entsprechend dem Mengenstrom der zugeführten Komponenten regelt. Dabei wird der Mengenstrom so eingestellt, dass sich für die Reaktanden je nach Betriebstemperatur eine Verweildauer im Reaktor von 10 Minuten und mehr ergibt.

Die Umsetzung der Stoffe im Reaktor wird bei Betriebstemperaturen von 150 bis 250°C und Drücken von 5 bis 40 bar durchgeführt. Die mittlere Feststoffkonzentration (Quarzsand) im Suspendierteil 11 des Reaktors wird auf einen Wert grösser 15 Volumen-% eingestellt.

Über eine Ablaufleitung 71 kann dem Umlauf-Suspensionsreaktor 1 kontinuierlich eine Natriumsilikatlösung entnommen werden, deren Gewichtsverhältnis $SiO_2:Na_2O$ im Bereich von 1 bis 2,8: 1 liegt. Diese Lösung muss abgekühlt und auf Umgebungsdruck entspannt werden. Bei einer bevorzugten Ausführungsform, dargestellt in den Figuren 1 und 2, wird die über die Ablaufleitung 71 abströmende Lösung in einem Wärmetauscher 72 auf Temperaturen im Bereich von 90 bis 105°C abgekühlt. Die beim Abkühlen freiwerdende Wärme kann zum Aufheizen einer der Einsatzkomponenten, bevorzugt der Natronlauge, genutzt werden.

Die abgekühlte Wasserglaslösung wird anschliessend mit Hilfe eines Entspannungsventils 74 auf Umgebungsdruck entspannt.

In einer bevorzugten Ausführungsform der erfindungsgemässen Vorrichtung kann die Wasserglaslösung auch ohne vorangehenden Kühlschritt unmittelbar entspannt werden. Der in diesem Falle bei der Entspannung entstehende Dampf wird dann zum unmittelbaren Aufheizen der Einsatzkomponenten genutzt, was bei der Zuführung der entsprechenden Einsatzkomponente zu berücksichtigen ist. Vorteilhafterweise wird die Entspannung in diesem bevorzugten Fall mehrstufig ausgeführt.

Die aus dem Umlauf-Suspensionsreaktor 1 abströmende Wasserglaslösung enthält unter Umständen noch geringe Mengen an ungelöstem Quarzsand sowie weitere ungelöste Verunreinigungen. Diese werden durch einen anschliessenden Filtrationsschritt mit Hilfe geeigneter, an sich bekannter Filter 75 abgetrennt, so dass eine gereinigte, ungetrübte Natriumsilikatlösung erhalten wird.

In einer bevorzugten Ausführungsform der erfindungsgemässen Vorrichtung ist die Filteranlage 75 ein Anschwemmfilter.

Das Grundprinzip der beschriebenen Vorrichtung unter Verwendung der in den Figuren 1 und 2 schematisch dargestellten Reaktor-Anordnungen ist es, die Suspendierenergie – aus Gründen der Verschleissminderung – in einen Umlaufstrom der geklärten, feststofffreien Reaktionslösung einzutragen. Unter Beibehaltung dieser Grundidee sind noch verschiedene weitere Ausführungsformen der erfindungsgemässen Vorrichtung denkbar. So kann der Schwerkrafteindicker 12 gegebenenfalls Einbauten aufweisen, beispielsweise nach Art eines Lamelleneindickers. Zur zusätzlichen Verbesserung der Abscheidung feinster Sandteilchen können dem Auslauf in die Umlaufleitung 14 gegebenenfalls Kerzenfilter oder Hydrozyklone vorgeschaltet werden.

Die Erfindung wird durch das nachfolgende Beispiel näher ausgeführt.

Beispiel

Dem in Fig. 1 beschriebenen Umlauf-Suspensionsreaktor wurden kontinuierlich folgende Stoffströme zugeführt:

1. feuchter, ungemahlener Quarzsand in einer Menge von 320 kg · h⁻¹ und einer durchschnittlichen Korngrösse von 0,3 mm (maximale Korngrösse: 0,9 mm), Feuchtigkeitsgehalt des Quarzsandes: 3,7%, $SiO_2$-Gehalt des trockenen Quarzsandes 99,7%.

2. 50%ige Natronlauge in einer Menge von 395 kg · h⁻¹, $Na_2O$-Gehalt: 38,7%;

3. vollentsalztes Wasser in einer Menge von 285 kg. h⁻¹, wobei 185 kg · h⁻¹ des Wassers zum Suspendieren des Sandes verwendet und gemeinsam mit dem Sand dem Reaktor zugeführt wurde, und

4. Heissdampf einer Temperatur von 210°C in einer Menge von 200 kg · h⁻¹.

Die Temperatur im Reaktor betrug 205°C und wurde durch Eintrag von Heissdampf konstant gehalten. Der Druck im Reaktor betrug 15 bar.

Die kontinuierlich abströmende Natriumsilikatlösung wurde mit dem Wärmeaustauscher auf ca. 50°C abgekühlt und anschliessend auf Umgebungsdruck entspannt.

Die chemische Analyse der Produktlösung ergab folgende Werte:
$SiO_2$-Gehalt: 25,38%;
$Na_2O$-Gehalt: 12,71%
Gewichtsverhältnis $SiO_2$ : $Na_2O$ = 2,0:1.

Das Produkt enthielt noch geringe Mengen an sehr feinem Quarzsand und aus dem Sand stammende unlösliche Verunreinigungen, die durch Filtration über ein Anschwemmfilter abgetrennt wurden. Man erhielt ein klare Natriumsilikatlösung.

**Patentansprüche**

1. Vorrichtung zur kontinuierlichen hydrothermalen Herstellung von Natriumsilikat-Lösungen mit einem Gewichtsverhältnis $SiO_2$:$Na_2O$ von 1 bis 2,8 : 1 durch Aufschluss von Sand in wässrigen Natriumhydroxidlösungen unter Hydrothermalbedingungen bei Temperaturen im Bereich von 150 bis 250°C und Drücken im Bereich von 5 bis 40 bar, dadurch gekennzeichnet, dass sie die folgende Zusammensetzung von Teilapparaturen enthält:

a) einen Umlauf-Suspensionsreaktor (1), bestehend aus einem Strahlschlaufenmischer (11) mit einem koaxial angeordneten Einsteckrohr (13), der zusätzlich zu einer Treibstrahldüse (16) am Behälterboden mindestens eine Tangentialdüse (17) in Bodennähe aufweist, einen auf den Strahlschlaufenmischer (11) aufgesetzten Schwerkrafteindicker (12),

b) eine am Kopfbereich des Schwerkrafteindickers (12) angebrachte Umlaufleitung (14), die nahezu oder vollständig feststofffreie Reaktionslösung über eine Pumpe (15) den Treibstrahl- bzw. Tangentialdüsen (16 bzw. 17) am Boden des Umlauf-Suspensionsreaktors (1) zuführt,

c) eine Suspendiereinrichtung (2), in der Quarzsand und ein geeignetes Suspensionsmittel mit Hilfe eines Rührers (23) vermischt und mit Hilfe einer Pumpe (24) dem Umlauf-Suspensionsreaktor (1) zugeführt werden,

d) Dosiereinrichtungen mit dazugehörigen Pumpen (31 bzw. 41) für Natronlauge (3) und Wasser (4),

e) eine Dosiereinrichtung für Dampf (5) mit einem durch einen Temperaturregler (53) von einem im Innern des Reaktors (1) angebrachten Temperaturfühler (52) gesteuerten Dampfstellventil (51),

f) Anzeige- bzw. Steuereinheiten für die Höhe des Flüssigkeitsstandes (61) und des Druckes (62),

g) eine am Kopf des Schwerkrafteindickers (12) angebrachte Ablaufleitung (71) für des flüssige Reaktionsprodukt, h) einen Wärmetauscher (72) mit nachgeschalteter Temperaturkontrolle (73),

i) ein Entspannungsventil (74) und

k) eine zur Filtration der Produkt-Lösung nach an sich bekannten Methoden bestimmte Filteranlage (75).

2. Vorrichtung nach Anspruch 1, dadurch gekennzeichnet, dass die Dosiereinrichtungen mit den dazugehörigen Pumpen (31 bzw. 41) für Natronlauge (3) und für Wasser (4) so angeordnet sind, dass sie eine Zufuhr der Natronlauge und des Wassers in die Umlaufleitung (14) ermöglichen.

3. Vorrichtung nach Ansprüchen 1 und 2, dadurch gekennzeichnet, dass die Dosiereinrichtung für den Heissdampf so angeordnet ist, dass sie eine Dampfzufuhr in den Raum zwischen Behälterwand des Strahlschlaufenmischers (11) und Einsteckrohr (13) ermöglicht.

4. Vorrichtung nach Ansprüchen 1 bis 3, dadurch gekennzeichnet, dass die Filteranlage (75) ein Anschwemmfilter ist.

**Claims**

1. An apparatus for the continuous hydrothermal production of sodium silicate solutions having a ratio by weight of $SiO_2$ to $Na_2O$ of from 1 to 2.8:1 by fusing sand in aqueous sodium hydroxide solutions under hydrothermal conditions at temperatures of from 150 to 250°C and under pressures of from 5 to 40 bar, characterized in that it comprises the following combination of component apparatus:

a) a circulating-suspension reactor (1) consisting of a jet loop mixer (11) with a coaxially arranged insertion tube (13), which – in addition to a power jet nozzle (16) at the base of the container – comprises at least one tangential nozzle (17) near the base; a gravity thickener (12) surmounting the jet loop mixer (11),

b) a circulation pipe (14) arranged at the head of the gravity thickener (12) which delivers virtually or completely solids-free reaction solution via a pump (15) to the power jet and tangential nozzles (16 and 17) at the base of the circulating-suspension reactor (1),

c) a suspending unit (2) in which quartz sand and a suitable suspending medium are mixed by means of a stirrer (23) are delivered by a pump (24) to the circulating-suspension reactor (1),

d) metering units with associated pumps (31 and 41) for sodium hydroxide (3) and water (4),

e) a metering unit for steam (5) comprising a steam valve (51) controlled by a temperature regulator (53) from a temperature sensor (52) arranged inside the reactor (1),

f) instruments for indicating and controlling the liquid level (61) and the pressure (62),

g) an outlet pipe (71) for the liquid reaction product arranged at the head of the gravity thickener (12), h) a heat exchanger (72) followed by a temperature control (73), i) a relief valve (74) and

k) a filter unit (75) for filtering the product solution by methods known per se.

2. An apparatus as claimed in claim 1, characterized in that the metering units with the associated pumps (31 and 41) for sodium hydroxide (3) and for water (4) are arranged in such a way they enable the sodium hydroxide and the water to be delivered into the circulation pipe (14).

3. An apparatus as claimed in claims 1 and 2, characterized in that the metering unit for the superheated steam is arranged in such a way that it enables steam to be fed into the space between the container wall of the jet loop mixer (11) and the insertion tube (13).

4. An apparatus as claimed in claims 1 to 3, characterized in that the filter unit (75) is a settling filter.

**Revendications**

1. Dispositif pour la préparation hydrothermique en continu de solutions de silicate de sodium avec un rapport pondéral $SiO_2:Na_2O$ de 1 à 2,8:1 par désagrégation de sable dans des solutions aqueuses d'hydroxyde de sodium et dans des conditions hydrothermiques à des températures se situant dans l'intervalle allant de 150 à 250°C et sous des pressions allant de 5 à 40 bars, ce dispositif étant caractérisé en ce qu'il comporte des appareils partiels de la constitution suivante:

a) un réacteur de mise en suspension à circulation (1) constitué d'un mélangeur en boucle à jets (11) avec un tube d'enfichage (13) disposé coaxialement qui, outre une buse à jets de propulsion (16) située au fond du récipient, comporte au moins une buse tangentielle (17) à proximité de ce fond, ainsi qu'un épaississeur par gravité (12) placé par-dessus le mélangeur en boucle à jets (11),

b) une conduite de dérivation (14) adaptée à la zone de tête de l'épaississeur par gravité (12), acheminant, via une pompe (15), la solution réactionnelle presque ou complètement exempte de matières solides, aux buses à jets de propulsion ou tangentielle (16 ou 17), au fond du réacteur de mise en suspension à circulation (1),

c) un dispositif de mise en suspension (2) dans lequel du sable silicieux et un agent de mise en suspension approprié sont mélangés à l'aide d'un agitateur (23), le mélange obtenu étant acheminé, à l'aide d'une pompe (24) au réacteur de mise en suspension à circulation (1),

d) des dispositifs de dosage auxquels sont attribuées des pompes (31 ou 41) pour la lessive de soude (3) et l'eau (4),

e) un dispositif de dosage pour la vapeur d'eau (5), pourvu d'une soupape de réglage de vapeur d'eau (51) commandée par un régulateur de température (53) faisant partie d'un capteur de température (52) adapté à l'intérieur du réacteur (1),

f) des unités d'affichage ou de commande pour le niveau de liquide (61) et de la pression (62),

g) une conduite d'évacuation (71) pour le produit réactionnel liquide, cette conduite étant adaptée à la tête de l'épaisseur par gravité (12),

h) un échangeur de chaleur (72) en aval duquel est monté un dispositif de contrôle de température (73),

i) une soupape de détente (74) et

k) une installation (75) destinée à filtrer la solution de produits selon des méthodes connues en soi.

2. Dispositif selon la revendication 1, caractérisé en ce que les dispositifs de dosage comportant les pompes correspondantes (31 ou 41) pour la lessive de soude (3) et pour l'eau (4) sont disposés de telle sorte qu'ils permettent une alimentation de la lessive de soude et de l'eau dans la conduite de dérivation (14).

3. Dispositif selon les revendications 1 et 2, caractérisé en ce que le dispositif de dosage pour la vapeur d'eau chaude est disposé de telle sorte qu'il permette une alimentation de vapeur d'eau dans l'espace compris entre la paroi du récipient du mélangeur en boucle à jets (11) et le tube à enfichage (13).

4. Dispositif selon les revendications 1 à 3, caractérisé en ce que l'installation de filtration (75) est un filtre à couches.

Fig. 1

Fig. 2